# EUROPEAN PATENT APPLICATION

(11) **EP 1 875 975 A2**
(43) Date of publication of application: **09.01.2008**
(21) Application number: 07011315.4
(22) Date of filing: 08.06.2007
(51) Int. Cl.: B21D 28/36

(54) **Shear at low inertia for continuous cut of a metallic sheet**

(30) Priority: 07.07.2006 IT MI20061312
(71) Applicant: Selema Srl, 20034 Giussano (MI) (IT)
(72) Inventor: Cozzi, Serafino, 20048 Carate Brianza (MI) (IT)

(57) **Abstract**

Shear (10) at low inertia for continuous cut of a metallic sheet including an upper roller (20) provided with an upper housing (22) suitable to house and to constrain a corresponding upper blade (24) which protrudes radially respect to the upper roller (20), a lower roller (30) provided with a lower housing (32) suitable to house and to constrain a corresponding lower blade (34) which protrudes radially respect to the lower roller (30), the upper blade (24) and the lower blade (34) are suitable to come close to each other and to engage with the metallic sheet in a cutting position in order to cooperate with each other for obtaining the cut of said metallic sheet itself.

The shear (10) include rotating stiffening means capable of stiffening the upper roller (20) and the lower roller (30) when the upper blade (24) and the lower blade (34) are close to the cutting position and also the rotating stiffening means are capable of not interfering with the upper blade (24) and with the lower blade (34).

## Description

The present invention refers to a shear at low inertia for continuous cut of a metallic sheet.

In particular this invention refers to a shear with rotating cylinder or rollers for the cutting of aluminium or its alloys in form of metallic sheet or plate.

Generally the metallic sheet is feeded up to the shear and forced to pass through a couple of rotating cylinder or rollers, an upper and the other inferior, both of them is provided with a corresponding blade, called respectively upper blade and lower blade, thus in order to cut the metallic sheet according to predetermined lengths.

Both the upper blade and the lower blade are positioned and constrained into corresponding blade holder housings, respectively an upper and a lower one, in order to protrudes radially respect to each corresponding roller.

In particular the metallic sheet is cut transversally and thoroughly along its complete width, and so each blade protrudes radially respect to the correspondent roller for its complete length.

The rollers are rotated in a way to give to the upper and lower blade a predetermined speed both in module and direction.

So both the upper blade and the lower blade rotate with the corresponding rollers until they move closer to each other by coming nearer to the metallic sheet and by working together they determine the cut of the metallic sheet.

In a cutting position, along a longitudinal feed direction of the metallic sheet, the upper and the lower blade results close and spaced of a predetermined distance from each other; also along a radial direction they pass through the metallic sheet and overlap each other, in this way they determine the fracture and the following cut of the metallic sheet.

When cutting the metallic sheet, in particular the aluminium in its various alloys, the necessary condition to obtain perfectly cutted sheets is to gauge properly the interspace and the correct overlapping of the two blades.

In other words it is of essential importance to maintain constant a longitudinal distance between the two blades (upper and lower) and a maximum radial overlapping still between the upper and the lower blade, and in particular for the whole length and duration of the cutting.

This is independent of the working speed of the cutting line and independently of the necessary cutting stress for the cutting.

The stresses that determine themselves in the cutting position cause a bending in elastic field both of the upper roller and of the lower roller.

Therefore it determines itself a variation of the two parameters, longitudinal distance and radial overlapping, that often damages the correct cutting of the metallic sheet.

In fact, during the cutting also a minimal bending of the blade holder rollers determine the separation of the blades, causing a forming of burrs on the metallic sheet next to the cutting line or causing a tear at intervals of the metallic sheet.

In worse cases this can cause a stretching of the metallic sheet without determining the cutting.

In order to avoid these inconveniences presently are built very robust shear with blade holder rollers of big diameter, in that way to reduce to a minimum the bending of the rollers, upper and lower.

For example there can be diameters of the order of 600-700 mm and also more on the basis of the thickness interval of the metallic sheet, and also on the basis of its hardness and maximum cutting width.

In other words the upper and lower rollers are oversized in the diameter, in order to avoid or at least reduce to a minimum the bending during the cutting, and in order to maintain constant during the cutting both the longitudinal distance and the penetration or radial phase shift between the upper blade and the lower blade.

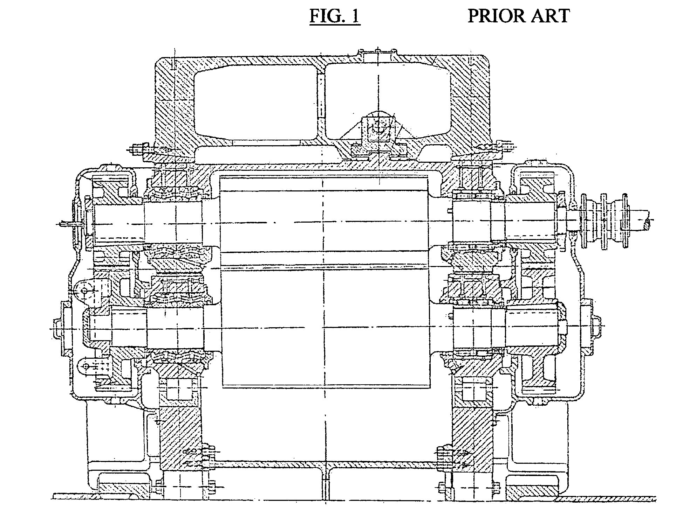

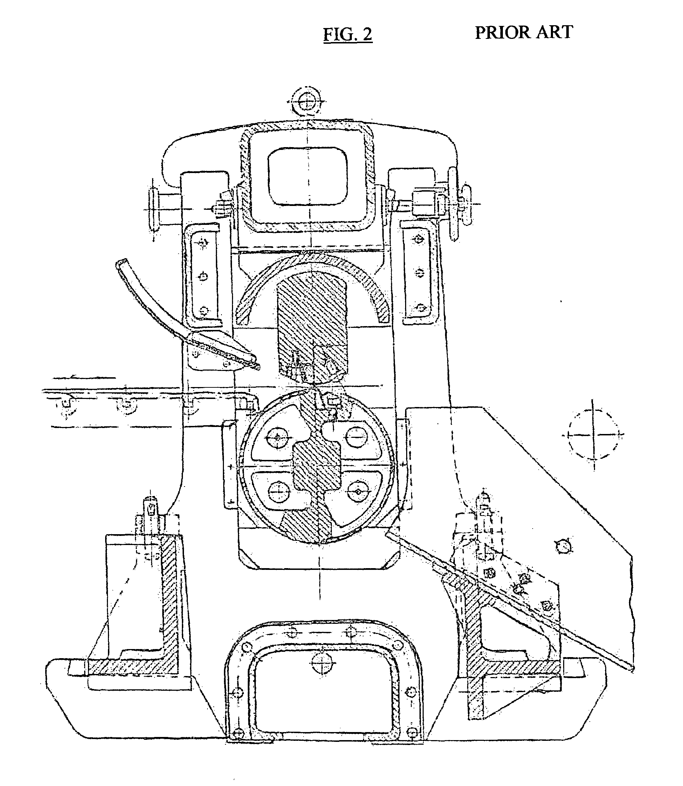

In the figures 1 and 2 are shown some shear for the continuous cut of metallic sheet according to the prior art.

A disadvantage of these present rotating rollers shear for the continuous cut of metallic sheet is that the oversize of the upper and lower rollers determines a weight and obstruction increase of the shear.

Consequently in order to be able to support the oversized rollers it is necessary to oversize the support bearings and the support structure of the shear.

Also another disadvantage of the roller oversize is that it occurs an increase of the inertias and so there are necessary drive means of the rollers very powerful, in order to be able to accelerate the rotating masses.

There are also necessary gears for the movement drive having a high number of teeth, because of the oversized dimensions of the primitive diameters of engagement.

The object of the present invention is to create a shear at low inertia for continuous cut of metallic sheet that avoids the over sizing of the upper and lower rollers and that allows at the same time a correct cutting of the metallic sheet.

Another object is to create a shear at low inertia for continuous cut of metallic sheet that allows a weight and size reduction of the same shear maintaining at the same time an elevated stiffness.

Still another object is to have a shear at low inertia for continuous cut of metallic sheet that allows a considerable reduction of the inertias of the moving parts in movement and that allows at the same time a reduction of energy consumptions of the shear.

Further object is to have a shear at low inertia for continuous cut of metallic sheet that allows a reduction of time and costs of production and transport of the shear itself.

These objects according to the present invention are achieved by realizing a shear at low inertia for continuous cut of metallic sheet according to claim 1.

Other features of the invention are pointed out in the following claims.

The features and the advantages of a shear at low inertia for continuous cut of metallic sheet according to the present invention will appear more evident from the following illustrative and not limitative description, , referred to the attached schematic drawings in which:
figure 1 is a raised frontal sectioned view of a shear for continuous cut of metallic sheet according to the prior art;
figure 2 is a raised frontal sectioned view of the shear of figure 1 according to the prior art;

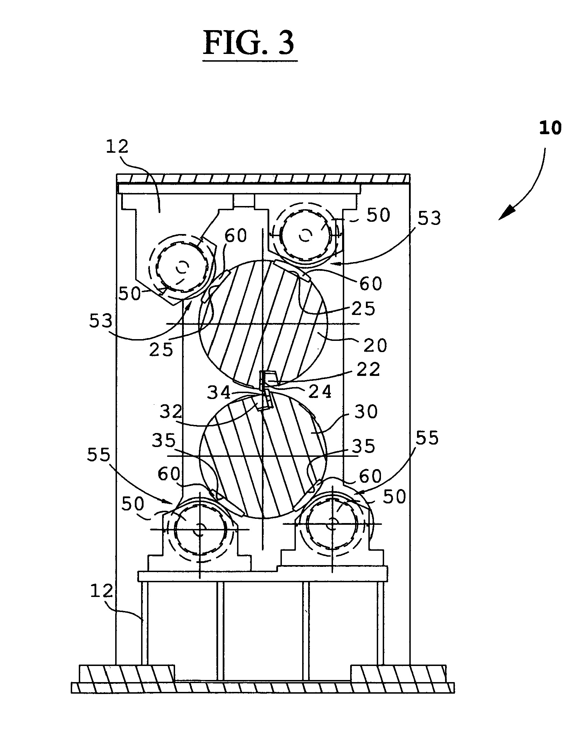

figure 3 is schematic a raised side partially sectioned view of a preferred form of embodiment of a shear at low inertia for continuous cut of metallic sheet according to the present invention;

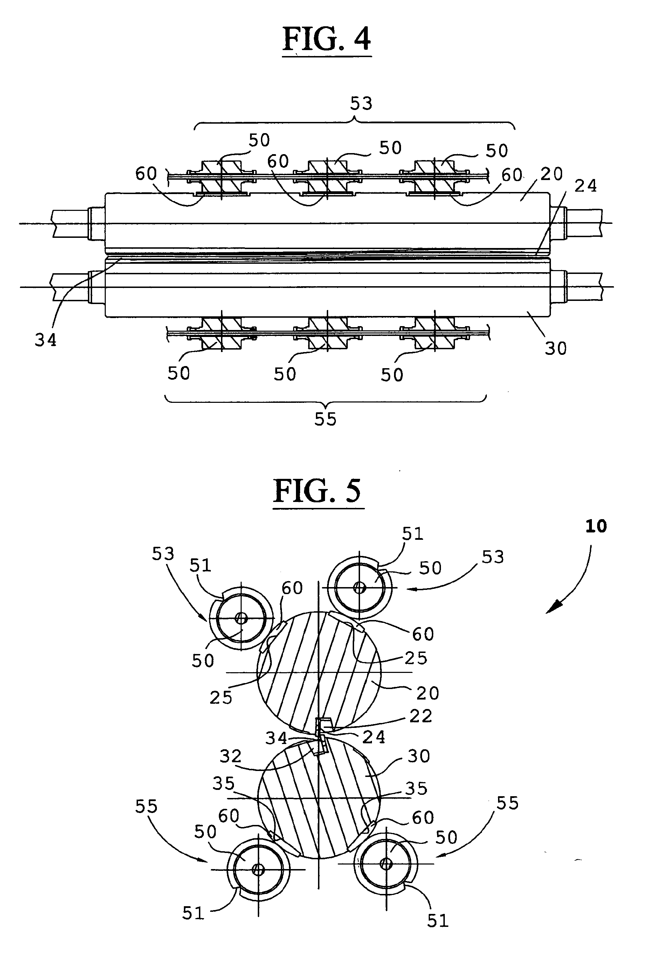

figure 4 is a raised frontal partially sectioned detail of the shear at low inertia of figure 3;
figure 5 is a raised side partially sectioned detail of the shear at low inertia of figure 3;
figure 6 is a raised side partially sectioned detail of the shear at low inertia of figure 3, which shows the size and weight reduction of the shear at low inertia according to the present invention.

With reference to the figures, it is shown a shear at low inertia 10 for continuous cut of a metallic sheet, in particular aluminium sheet.

Said shear 10 at low inertia for the continuous cut of metallic sheet including:
- an upper roller or cylinder 20 provided with an upper housing 22 suitable to house and to constrain a corresponding upper blade 24 which protrudes radially respect to said upper roller 20,
- a lower roller or cylinder 30 provided with a lower housing 32 suitable to house and to constrain a corresponding lower blade 34 which protrudes radially respect to said lower roller 30,
- said upper blade 24 and said lower blade 34 being suitable to come close to each other and to engage with said metallic sheet in a cutting position in order to cooperate with each other for obtaining the cut of said metallic sheet itself.
Said upper blade 24 and said lower blade 34 being substantially aligned along a transversal direction respect to a longitudinal feed direction of said metallic sheet.

Said shear 10 includes rotating stiffening means suitable of stiffening said upper roller 20 and said lower roller 30, when said upper blade 24 and said lower blade 34 results in proximity of said cutting position.

Also said rotating stiffening means are suitable of not interfering with said upper blade 24 and with said lower blade 34.

In this way it is possible to stiffen both the upper roller 20 and the lower roller 30 by reducing to a minimum the leakages for friction since advantageously said rotating stiffening means can rotate at the same peripheral speed of the upper roller 20 or of the lower roller 30.

Advantageously it is possible to stiffen the structure of said upper roller 20 and of said lower roller 30 by avoiding their overstatement.

In other words said rotating stiffening means are suitable of stiffening in discontinuous way said upper roller 20 or said lower roller 30, in other words only when it is necessary.

In this way, by means of said rotating stiffening means, it is possible to stiffen the upper roller 20 and the lower roller 30 in proximity of said cutting position, and consequently it determines a stiffening only during the cutting phase of said metallic sheet, in other words in the cutting position and also in the immediately previous and following positions of said cutting position.

Advantageously it is possible to reduce to a minimum the leakages for friction and also the wear of the contact surfaces.

Preferably said rotating stiffening means include a plurality of stiffening rollers or cylinders 50 associated to said upper roller 20 and to said lower roller 30.

Said shear 10 preferably includes a plurality of stiffening elements 60 each of which is suitable of working with each other in proximity of said cutting position with said rotating stiffening means and at the same time with said upper roller 20 or with said lower roller 30, this in order to stiffen said shear 10.

In a preferred form of embodiment each stiffening element 60 is constrained or made integral respectively to said upper roller 20 and to said lower roller 30.

Preferably each stiffening roller 50 includes a groove 51, in particular "V" shaped, which is substantially aligned as said upper blade 24 or as said lower blade 34.

This in order to not make interfere each stiffening roller 50 with said upper blade 24 or with said lower blade 34.

According to a preferred form of embodiment each stiffening element 60 is housed respectively in a housing 25 or 35 realized respectively in said upper roller 20 or in said lower roller 30 in such a way as to protrudes radially respect to the same.

Preferably each stiffening element 60 is a hard metal foil that protrudes radially which has been made integral to a correspondent upper roller 20 or lower roller 30.

In another preferred form of embodiment each stiffening element 60 is integral to said upper roller 20 or to said lower roller 30.

In another alternative preferred form of creation each stiffening element 60 is constrained or made integral to a correspondent stiffening roller 50.

Preferably said plurality of stiffening rollers 50 is placed in a plurality of series.

Said plurality of series are preferably two series of upper stiffening rollers 53 and two series of lower stiffening rollers 55 that are hinged to a fixed structure 12 of said shear.

According to a preferred form of embodiment of the present invention said shear 10 includes drive means, not shown, that are connected to said rotating stiffening means, to said upper roller 20 and to said lower roller 30.

In particular said drive means include preferably a gear drive, preferably with retrieval system of the clearances between the teeth, connected both to the rotating stiffening means and to said upper roller 20 and to said lower roller 30.

Preferably said two series of upper stiffening rollers 53, said two series of lower stiffening rollers 55 and said plurality of stiffening elements 60 are positioned along the main directions of a stress that is produced radially during the cut of said metallic sheet.

In this way it is advantageously obtained a shear at low inertia 10 for continuous cut of metallic sheet that is perfectly balanced and also provided with a high stiffness.

Preferably each series of stiffening rollers includes three stiffening rollers 50 which, in an advantageously preferred form of embodiment, are positioned respectively near to a central section and near to a first section placed at 1/4 and of a second section placed at 3/4 of the length of said upper roller 20 or of said lower roller 30.

Advantageously in this way it is possible to reduce considerably the bending of said upper roller 20 and of said lower roller 30 by maintaining constant, during the cut of said metallic sheet, the longitudinal distance and the maximum radial overlapping of said upper blade 24 respect to said lower blade 34.

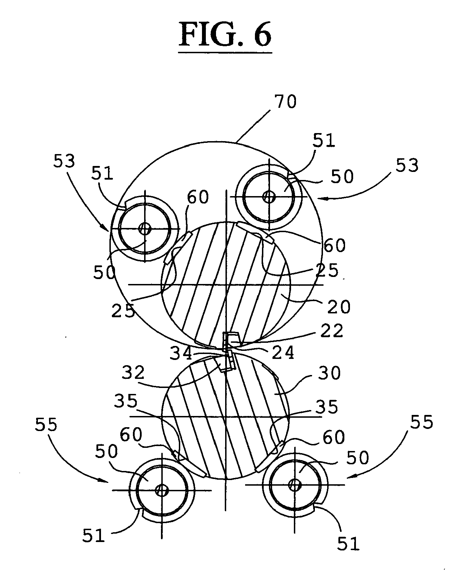

With reference to figure 6 it is also possible to observe that said upper roller 20 coupled to the corresponding series of upper stiffening rollers 53 acts like an equivalent upper roller 70 having a section of minimum diameter equal to the diameter of the circumscribed ring at the upper roller 20 and at the two corresponding series of upper stiffening rollers 53.

Similarly happens the same thing for said lower roller 30 coupled to the corresponding series of lower stiffening rollers 55.

Advantageously the considerable saving of weight and of size respect to the normal shears for continuous cut of metallic sheet becomes so evident.

Advantageously it is possible a reduction of the diameter of the upper roller 20 and of the lower roller 30 of about 40 % respect to the shear of the mentioned skill.

Advantageously this determines a considerable saving in energetic terms since the drive and support means have not to be overstated.

In this way it has been seen that shear at low inertia for continuous cut of metallic sheet according to the present invention achieves the objectives previously mentioned.

The shear at low inertia for continuous cut of metallic sheet of the present invention thus conceived can undergo to numerous modifications and variations, all including in the same inventive concept.

Furthermore, in practice the materials used, as well as their dimensions and the components, can vary according to the technical needs.

## Claims

1. Shear (10) at low inertia for continuous cut of a metallic sheet including an upper roller (20) provided with an upper housing (22) suitable to house and to constrain a corresponding upper blade (24) which protrudes radially respect to said upper roller (20), a lower roller (30) provided with a lower housing (32) suitable to house and to constrain a corresponding lower blade (34) which protrudes radially respect to said lower roller (30), said upper blade (24) and said lower blade (34) being suitable to come close to each other and to engage with said metallic sheet in a cutting position in order to cooperate with each other for obtaining the cut of said metallic sheet itself, **characterized by** comprising rotating stiffening means suitable of stiffening said upper roller (20) and said lower roller (30) when said upper blade (24) and said lower blade (34) results in proximity of said cutting position, and also said rotating stiffening means being suitable of not interfering with said upper blade (24) and with said lower blade (34).

2. Shear (10) according to claim 1, **characterized in that** said rotating stiffening means comprising a plurality of stiffening rollers or cylinders (50) associated to said upper roller (20) and to said lower roller (30).

3. Shear (10) according to claim 1 or 2, **characterized by** comprising a plurality of stiffening elements (60) each of which is suitable to cooperate with each other in proximity of said cutting position with said rotating stiffening means and at the same time with said upper roller (20) or with said lower roller (30), in order to stiffen said shear (10).

4. Shear (10) according to claim 3, **characterized in that** each stiffening element (60) is constrained or made integral respectively to said upper roller (20) and to said lower roller (30).

5. Shear (10) according to any one of the claims from 2 to 4, **characterized in that** each stiffening roller (50) includes a groove (51).

6. Shear (10) according to claim 5, **characterized in that** said groove (51) is substantially aligned as said upper blade (24) or as said lower blade (34).

7. Shear (10) according to any one of the claims from 3 to 6, **characterized in that** each stiffening element (60) is housed respectively in a housing (25) or (35) realized in said upper roller (20) or in said lower roller (30) in such a way as to protrudes radially respect to the same.

8. Shear (10) according to any one of the claims from 3 to 7, **characterized in that** each stiffening element (60) is a hard metal foil that protrudes radially which has been made integral to a correspondent upper roller (20) or lower roller (30).

9. Shear (10) according to any one of the claims from 2 to 8, **characterized in that** said plurality of stiffening rollers (50) is placed in a plurality of series.

10. Shear (10) according to claim 9, **characterized in that** said plurality of series are two series of upper stiffening rollers (53) and two series of lower stiffening rollers (55) that are hinged to a fixed structure (12) of said shear.

11. Shear (10) according to claim 10, **characterized in that** said two series of upper stiffening rollers (53), said two series of lower stiffening rollers (55) and said plurality of stiffening elements (60) are positioned along the main directions of a stress that is produced radially during the cut of said metallic sheet.

12. Shear (10) according to any one of the claims from 9 to 11, **characterized in that** each series of stiffening rollers includes three stiffening rollers (50).

13. Shear (10) according to claim 12, **characterized in that** said three stiffening rollers (50) of each series of stiffening rollers are positioned respectively near to a central section and near to a first section placed at 1/4 and of a second section placed at 3/4 of the length of said upper roller (20) or of said lower roller (30).

14. Shear (10) according to any one of the claims from 1 to 13, **characterized by** comprising driving means connected to said rotating stiffening means, to said upper roller (20) and to said lower roller (30).

15. Shear (10) according to claim 14, **characterized in that** said driving means include a gear drive, connected both to the rotating stiffening means and to said upper roller (20) and to said lower roller (30).
